(19) ))) Europäisches
Patentamt

European
Patent Office

Office européen
des brevets

(11)     EP 1 350 241 B1

(12)                     **EUROPEAN PATENT SPECIFICATION**

(45) Date of publication and mention
of the grant of the patent:
**06.03.2013  Bulletin 2013/10**

(51) Int Cl.:
***G09G 3/36*** (2006.01)

(21) Application number: **01991785.5**

(22) Date of filing: **03.12.2001**

(86) International application number:
**PCT/EP2001/014273**

(87) International publication number:
**WO 2002/048780 (20.06.2002 Gazette 2002/25)**

(54) **Active matrix device with reduced power consumption**

FLÜSSIGKRISTALL-ANZEIGEVORRICHTUNG MIT AKTIVER MATRIX MIT REDUZIERTEM
LEISTUNGSVERBRAUCH

DISPOSITIF A MATRICE ACTIVE A CONSOMMATION D'ENERGIE REDUITE

(84) Designated Contracting States:
**AT BE CH CY DE DK ES FI FR GB GR IE IT LI LU
MC NL PT SE TR**

(30) Priority: **15.12.2000  GB 0030592**

(43) Date of publication of application:
**08.10.2003  Bulletin 2003/41**

(73) Proprietor: **TPO Hong Kong Holding Limited
Shatin, Hong Kong (CN)**

(72) Inventor: **EDWARDS, Martin, J.**
**NL-5656 AA Eindhoven (NL)**

(74) Representative: **Hutter, Jacobus Johannes et al
Nederlandsch Octrooibureau
P.O. Box 29720
2502 LS Den Haag (NL)**

(56) References cited:
**EP-A- 0 315 365     EP-A- 0 342 925
US-A- 4 630 122     US-A- 5 907 313**

## Description

This invention relates to active matrix devices and more particularly, but not exclusively, to active matrix liquid crystal displays (AMLCDs). It is concerned with reduction of the power consumption of such devices.

Active matrix devices, such as AMLCDs, are used in a wide variety of products, including consumer electronics, computers and communication devices. The structure of an AMLCD is described for example in US-A-5130829 (our ref PHB 33646), the contents of which are incorporated herein as reference material. Active matrix devices are often included in portable products where the minimisation of power consumption is a particularly important consideration.

AMLCDs comprise an array of pixel elements addressed by means of row and column electrodes. The row electrodes are driven with row selection signals, while the column electrodes carry video Information. A significant component of the power consumption of an AMLCD is the power required to charge and discharge the columns of the display as the video information is applied to successive rows of pixels. The invention seeks to reduce the power consumed by this process.

EP0315365 describes a display device comprising a matrix of selectively settable liquid crystal display cells defined by areas of overlap between members of a set of row electrodes and members of a set of column electrodes. A first column electrode comprises a plurality of first column portions, each defining a sub-matrix. The display device further comprises means for driving said first column electrode; selectively operable means for switching for permitting selective electrical connection from each first column portion to the driving means and means for addressing simultaneously rows in more than one sub-matrix.

US4630122 describes a television receiver being equipped with a liquid crystal matrix display panel having the drive electrodes arranged such as to form a plurality of regions, with the regions each successively entering a drive phase of operation in which selection and bias drive signals are applied to the display element electrodes and a rest phase of operation in which a voltage level substantially equal to zero is applied between the display element electrodes, with only one region operating in the drive phase at a time and the remaining regions operating in the rest phase.

EP0342925 describes an active matrix panel comprising a picture element matrix, which is mounted on a transparent substrate and which includes a plurality of gate lines, a plurality of source lines and a plurality of picture elements. The active matrix panel further comprises a gate line drive circuit and a source line drive circuit. Each of the picture elements includes a thin film transistor and, in addition, at least one of the gate line drive circuit and the source line drive circuit comprises a plurality of thin film transistors provided on the transparent substrate.

US5907313 describes a matrix-type display device in which a number of pixels are arranged and a scanning line and a signal line to which a display signal is output are connected to each pixel. A signal line driver circuit in which a decoder circuit is controlled by a counter circuit, or a scanning line driver circuit in which a decoder circuit is controlled by a counter circuit is divided into a plurality of sections. A clock signal and/or a power supply voltage is selectively supplied to the respective sections.

The present invention provides an active matrix device as defined in independent claim 1.

The time taken to charge each column address conductor can therefore be increased. This reduces the frequency of the drive waveforms required to drive the device, and therefore the power consumption of the device. In a preferred embodiment, a control element in each of the sub-matrices is addressed simultaneously.

Preferably, the row driving circuitry is adapted to select a row in each sub-matrix simultaneously, and the column address circuitry is operable to apply a data signal simultaneously to a column address conductor of each sub-matrix. The row driving circuitry itself may select individually a row in each sub-matrix simultaneously, or alternatively, a row in one sub-matrix may be connected to a row in each of the other sub-matrices such that the connected rows are simultaneously selectable.

The row driving circuitry may be operable to simultaneously select rows in two adjacent sub-matrices in sequence from the adjacent to the distant edges of both sub-matrices, or vice versa. Rather than addressing the rows in each sub-matrix from top to bottom in turn, it may be advantageous to address the rows in a different sequence. If they are addressed in the same sequence then the last row to be addressed in one sub-matrix will be adjacent to the first row to be addressed in the matrix below it. There will then be a significant difference in the timing of the control element drive waveforms present in these two rows, which in display applications might result in a discontinuity in the visual appearance of the display at the junctions between the matrices. This may be avoided by addressing the first matrix from top to bottom, the second from bottom to top, the third from top to bottom, and so on.

Instead of addressing each column in a sub-matrix in turn, it may be preferable to drive each sub-matrix such that several columns are addressed simultaneously. This may allow the charging time for each column to be increased further, thus reducing the power consumption of the device. For example, each data supply means may be connected to a plurality of parallel data lines. Alternatively, the column driver means may receive data in a digital form and store the data for each column, in a latch for example. A digital to analogue converter may then be used to generate an analogue signal for application to the respective column. In that case, several or all the columns in each sub-matrix could be charged simultaneously.

The column address conductors of at least one sub-matrix may be connected to the respective data supply means via their ends adjacent another sub-matrix. Accordingly, in a device comprising three sub-matrices for example, the column address conductors of the middle sub-matrix are driveable from an edge of the sub-matrix which is adjacent one of the other sub-matrices. Conventionally, the address conductors of an active matrix are connected to driving circuitry at the outer edges of the matrix only. The column address conductors of the at least one sub-matrix may be connected to the respective data supply means by a data supply line which extends between the at least one sub-matrix and an adjacent sub-matrix.

In another embodiment, the data supply lines may be located within the respective sub-matrix, rather than at one edge. In a further preferred arrangement, the data supply lines is/are provided beneath the corresponding sub-matrix, for example, underneath one or more of the rows of control elements. It will be appreciated that the data supply lines could be provided at any vertical position within a sub-matrix, as the connections to the column electrodes may be made at any point along the length of the electrodes.

The column driver means preferably comprises a set of control lines, each control line being connected to a respective switching means in each sub-matrix, each switching means being arranged to connect selectively a column address conductor in each sub-matrix to the respective data supply means. Alternatively, the required control signals may be generated by circuitry within the column address circuitry of each sub-matrix, without requiring the inclusion of additional control lines.

The prior art and an embodiment of the invention will now be described by way of example and with reference to the accompanying schematic drawings, wherein:

Figure 1 shows the matrix configuration of a known active matrix device; and
Figure 2 shows the matrix configuration of an active matrix device in accordance with the invention.

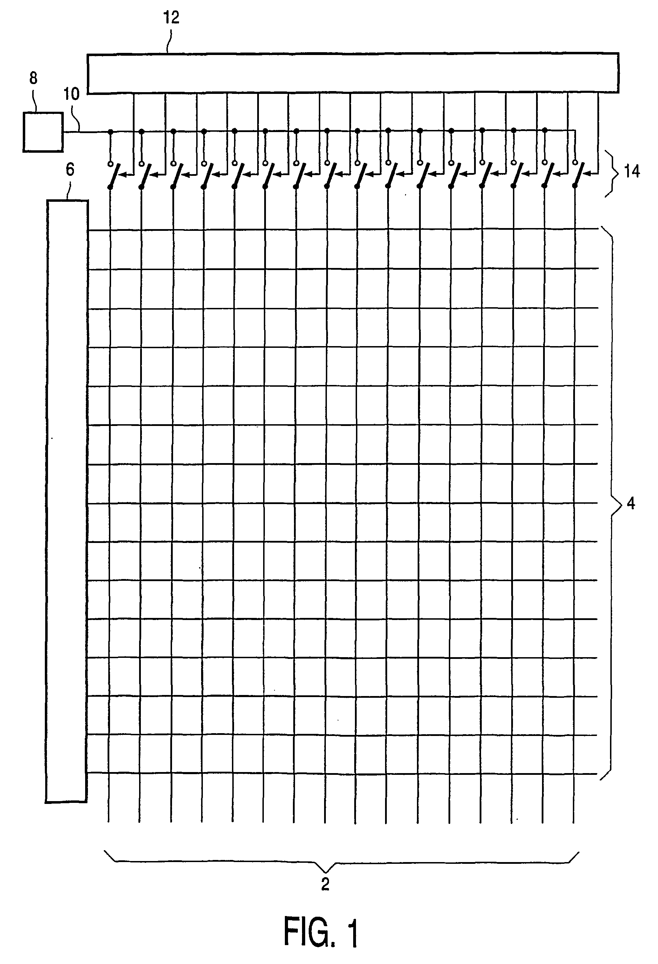

Figure 1 illustrates the matrix configuration of a known active matrix device which employs a simple multiplexing type of integrated column drive circuit. It comprises a set of column address conductors 2 and a set of row address conductors 4. Control elements (not shown) are disposed adjacent the intersections of the conductors and connected to one from each set. In an AMLCD for example, the control elements may be thin film transistors, fabricated using known LAE techniques and may comprise amorphous, microcrystalline or polycrystalline silicon devices. A row driver 6 applies selection signals to the matrix via the row address conductors and data signals are supplied along the column address conductors. The data signals are provided by data supply means 8 along data line 10. Column driver shift register 12 controls normally open switches 14 which are connected between a respective column address conductor and data line 10.

The matrix of Figure 1 operates as follows. The rows of control elements are selected in turn for a respective row address period upon application of selection signals by the row driver 6 to the appropriate row address conductors 4. In each row address period the data signals for the relevant row are applied to the column address conductors 2. The shift register 12 may operate to close each of the switches 14 in turn to feed the data signals fed along data line 10 to the appropriate column address conductor, with the row selection signal being applied after this has been done. Rather than switch each row on after application of the data signals, the selection signal could however be applied whilst the column switches 14 are being operated. The data signals may be stored on the column capacitance or, alternatively, for example, a dedicated capacitor could be connected to each column address conductor 2 to store the data signal temporarily. The control elements of such an active matrix device are normally addressed on a regular basis, each element being addressed once within the vertical scanning period, $T_F$. The power required to drive the columns of the matrix can be related to certain parameters by the expression below:

$$Power \propto N_C C_C \frac{N_R}{T_F}$$

in which $N_C$ is the number of column address conductors in the display, $C_C$ is the capacitance of one column address conductor, and $N_R$ is the number of row address conductors.

The applicants have determined that division of the columns into a number, $N_S$, of separate sections, which may be addressed simultaneously, can significantly reduce the power consumption of the device.

For example, if the columns are divided into sections of equal length, the capacitance of each section will be $C_C/N_S$. If the sections of the display corresponding to the separate sections of the column are addressed simultaneously, the frequency with which the data should be applied to the column sections is reduced by a factor of $1/N_S$. The number of column sections is now $N_S N_C$. Modifying the expression given above for a conventional matrix to reflect these changes gives:

$$Power \propto \left(N_S N_C\right)\left(C_C / N_S\right)\frac{N_R}{N_S T_F}$$

Simplifying this expression yields:

$$Power \propto N_C C_C \frac{N_R}{N_S T_F}$$

It can therefore be seen that dividing the column address conductors into $N_S$ sections reduces the power required to charge the column electrodes by a factor of $N_S$.

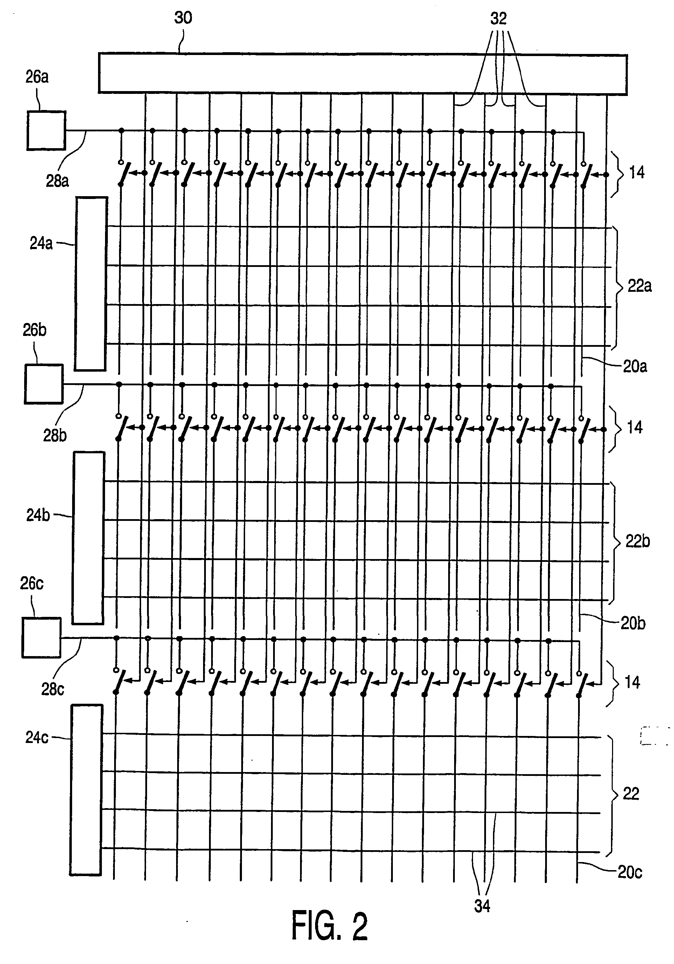

A matrix configuration which implements this concept is shown in Figure 2. In this example, the column address conductors have each been divided into three separately addressable column sections 20a, 20b and 20c, forming three sub-matrices 22a, 22b and 22c. The drive circuitry is reconfigured to allow for this change. Each sub-matrix has an associated row driver 24a, 24b or 24c, respectively, for driving its row address conductors 34. Data is fed to each sub-matrix from a corresponding data supply means 26a, 26b or 26c along a data line 28a, 28b or 28c. Three sets of switches 14 are therefore provided for connecting each data line to the column conductors of the respective sub-matrix. Column driver shift register 30 controls all three sets of switches via control lines 32. The control signals for operating the multiplexing switches can be the same for the three sub-matrices. In the configuration shown in Figure 2, these control lines 32 do not extend beyond the switches 14 at the upper end of the third sub-matrix 22c. It may be preferable in practice for the lines to continue into the third sub-matrix 22c in order to equalise the structure of the matrix. For example, in display applications, such extension of the lines across the full height of the display may be appropriate to ensure that capacitive effects of the lines are the same in each sub-matrix.

The control lines 32 of Figure 2 may require some additional power relative to the configuration of Figure 1. However, the amount of power required to drive these lines decreases as the number of sub-matrices, $N_S$, increases. This is because the number of times that the switches 14 need to be operated within each vertical scanning period decreases by a factor of $N_S$.

The matrix of Figure 2 is preferably driven such that each sub-matrix 22a to c is addressed at the same time. Thus, the first row of each sub-matrix is addressed simultaneously, and the same applies to each successive row as they are addressed in turn in each sub-matrix. In this way, as noted above, the time taken to apply a signal to each control element may be increased relative to the existing configuration of Figure 1, as the whole vertical scanning period can be used to drive each sub-matrix, leading to a reduction in overall power consumption.

Although most of the row and column drive circuitry illustrated in Figure 2 (the switches 14, row drivers 24a to c, data supply means 26a to c and column driver shift register 30) is shown to be located to the side of the sub-matrices, it may be advantageous to integrate some or all of this circuitry within the area of the sub-matrices. This can reduce the amount of the peripheral area of the matrix which is occupied by drive circuitry, and hence the overall size of the device.

Memory circuitry may be integrated within the pixels to provide a low power mode of operation. In these displays, the video data transferred to the pixels may be in a digital form rather than analogue.

From reading the present disclosure, other variations and modifications will be apparent to persons skilled in the art. Such variations and modifications may involve equivalent and other features which are already known in the design, manufacture and use of active matrix devices, which may be used instead of or in addition to features already described herein. it should be understood that the disclosure of the present invention is disclosed in the attached set of Claims.

## Claims

1. An active matrix device comprising two or more adjacent sub-matrices (22a-22c), each comprising a set of row address conductors (34), a set of column address conductors (20a-20c), and control elements disposed at intersections of the row and column address conductors, each control element having a scan input connected to a row address conductor (34) and a data input connected to a column address conductor (20a-20c), the device including row driving circuitry (24a-24c) for applying selection signals to the row address conductors (34), and column address circuitry (26a-26b, 30) for applying data signals to the column address conductors (20a-20c), wherein the device is divided into sub-matrices (22a-22c) terminating between adjacent row address conductors (34) of adjacent sub-matrices (22a-22c), and the row driving circuitry (24a-24c) and column address circuitry (26a-26c, 30) are adapted to address a control element in two or more sub-matrices (22a-22c) simultaneously, and the column address circuitry (26a-26c, 30) comprises a data supply means (26a-26c) for each sub-matrix (22a-22c), and column driver means (14, 28a-28c, 30) for selectively connecting the column address conductors (20a-20c) of each sub-matrix (22a-22c) to the respective data supply means (26a-26c) to apply the corresponding data signals thereto.

2. An active matrix device of Claim 1 wherein the row driving circuitry (24a-24c) is adapted to select a row address conductor (34) in each sub-matrix (22a-22c) simultaneously, and the column address circuitry (26a-26c, 30) is operable to apply a data signal simultaneously to a column address conductor (20a-20c) of each sub-matrix (22a-22c).

3. An active matrix device of Claim 1 or Claim 2 wherein a row address conductor (34) in one sub-matrix (22a-22c) is connected to a row address conductor (34) in each of the other sub-matrices (22a-22c) such that the connected row address conductors (34) are simultaneously selectable.

4. An active matrix device of any preceding Claim wherein the row drive circuitry (24a-24c) is operable to simultaneously select row address conductors (34) in two adjacent sub-matrices (22a-22c) in sequence from the adjacent to the distant edges of both sub-matrices (22a-22c), or vice versa.

5. An active matrix device of any preceding Claim wherein the column address conductors (20a-20c) of at least one sub-matrix (22a-22c) are connected to the respective data supply means (24a-24c) via their ends adjacent to another sub-matrix (22a-22c).

6. An active matrix device of any preceding Claim wherein the column address conductors (20a-20c) of the at least one sub-matrix (22a-22c) are connected to the respective data supply means (26a-26c) by a data supply line (28a-28c) which extends between the at least one sub-matrix (22a-22c) and an adjacent sub-matrix (22a-22c).

7. An active matrix device of any preceding Claim wherein the column driver means (14, 28a-28c, 30) comprises a set of control lines (32), each control line (32) being connected to a respective switching means (14) in each sub-matrix (22a-22c), each switching (14) means being arranged to connect selectively a column address conductor (20a-20c) in each sub-matrix (22a-22c) to the respective data supply means (26a-26c).

8. An active matrix device of any preceding Claim wherein each sub-matrix (22a-22c) has the same number of row address conductors (34).

9. An active matrix device of any preceding Claim comprising three or more sub-matrices (22a-22c).

10. A liquid crystal display comprising an active matrix device of any preceding Claim.

**Patentansprüche**

1. Ein Aktivmatrix-Gerät umfassend zwei oder mehr benachbarte Sub-Matrizes (22a-22c), die jeweils einen Satz an Reihenadressierungsleitern (34) umfassen, einen Satz an Spaltenadressierungsleitern (20a-20c), und Steuerelemente, die an Kreuzungen der Reihen- und Spaltenadressierungsleitern angebracht sind, wobei jedes Steuerelement einen Erfassungseingang aufweist, der mit einem Reihenadressierungsleiter (34) verbunden ist, und einen Dateneingang, der mit einem Spaltenadressierungsleiter (20a-20c) verbunden ist, und das Gerät eine Reihensteuerungsschaltung (24a-24c) einschließt, und Spaltenadressierungsleiter (20a-20c), wobei das Gerät in Sub-Matrizes (22a-22c) eingeteilt ist, die zwischen den benachbarten Reihenadressierungsleitern (34) benachbarter Sub-Matrizes (221-22c) enden, und die Reihensteuerungsschaltung (24a-24c) und die Spaltenadressierungsschaltung (26a-26c, 30) zum gleichzeitigen Adressieren eines Steuerelements in zwei oder mehr Sub-Matrizes (22a-22c) ausgelegt sind, und die Spaltenadressierungsschaltung (26a-26c, 30) einen Datenleitungsmittel (26a-26c) für jede Submatrix (22a-22c) umfasst, und Spaltensteuerungsmittel ( 14, 28a-28c, 30) für ein wahlweises Verbinden der Spaltenadressierungsleiter (20a-20c) jeder Sub-Matrix (22a-22c) mit dem jeweiligen Datenleitungsmittel (26a-26c), um darauf die jeweiligen Datensignale aufzubringen.

2. Ein Aktivmatrix-Gerät nach Anspruch 1, wobei die Reihensteuerungsschaltung (24a-24c) dazu ausgelegt ist, einen Reihenadressierungsleiter (34) in jeder Sub-Matrix (22a-22c) gleichzeitig auszuwählen, und die Spaltenadressierungsschaltung (26a-26c, 30) dazu einsetzbar ist, ein Datensignal gleichzeitig auf einen Spaltenadressierungsleiter (20a-20c) jeder einzelnen Sub-Matrix (22a-22c) aufzubringen.

3. Ein Aktivmatrix-Gerät nach Anspruch 1 oder Anspruch 2, wobei ein Reihenadressierungsleiter (34) in einer Sub-Matrix (22a-22c) mit einem Reihenadressierungsleiter (34) in jeder der anderen Sub-Matrizes (22a-22c) derart verbunden ist, dass die verbundenen Reihenadressierungsleiter (34) gleichzeitig auswählbar sind.

4. Ein Aktivmatrix-Gerät nach einem der vorhergehenden Ansprüche, wobei die Reihensteuerungsschaltung (24a-24c) dazu einsetzbar ist, Reihenadressierungsleiter (34) in zwei benachbarten Sub-Matrizes (22a-22c) gleichzeitig auszuwählen, die von den benachbarten zur den entfernten Kanten beider Sub-Matrizes (22a-22c), oder umgekehrt, hintereinander geschaltet sind.

5. Ein Aktivmatrix-Gerät nach einem der vorhergehenden Ansprüche, wobei die Spaltenadressierungsleiter (20a-20c) von zumindest einer Sub-Matrix (22a-22c) mit den jeweiligen Datenleitungsmitteln (24a-24c) über ihre Enden verbunden sind, die zu einer weiteren Sub-Matrix (22a-22c) benachbart sind.

6. Ein Aktivmatrix-Gerät nach einem der vorhergehenden Ansprüche, wobei die Spaltenadressierungsleiter (20a-20c) der zumindest einen Sub-Matrix (22a-22c) über eine Datenleitungsstrecke (28a-28c), die sich zwischen der zumindest einen Sub-Matrix (22a-22c) und einer benachbarten Sub-Matrix (22a-22c) erstreckt, mit den jeweiligen Datenleitungsmitteln (26a-26c) verbunden sind.

**7.** Ein Aktivmatrix-Gerät nach einem der vorhergehenden Ansprüche, wobei die Spaltensteuerungsmittel (14, 28a-28c, 30) einen Satz an Steuerstrecken (32) umfassen, wobei jede einzelne Steuerstrecke (32) mit jeweils einem Schaltmittel (14) in jeder Sub-Matrix (22a-22c) verbunden ist, und jedes Schaltmittel (14) zu einem wahlweisen Verbinden mit einem Spaltenadressierungsleiter (20a-20c) in jeder einzelnen Sub-Matrix (22a-22c) mit den jeweiligen Datenleitungsmitteln (26a-26c) verbinden.

**8.** Ein Aktivmatrix-Gerät nach einem der vorhergehenden Ansprüche, wobei jede einzelne Sub-Matrix (22a-22c) die gleiche Anzahl an Reihenadressierungsleitern (34) aufweist.

**9.** Ein Aktivmatrix-Gerät nach einem der vorhergehenden Ansprüche, umfassend drei oder mehr Sub-Matrizes (22a-22c).

**10.** Ein Flüssigkristall-Display umfassend ein Aktivmatrix-Gerät nach einem der vorhergehenden Ansprüche.

**Revendications**

**1.** Dispositif à matrice active comprenant au moins deux-sous-matrices adjacentes (22a-22c) comprenant chacune un jeu de conducteurs d'adressage de rangée (34), un jeu de conducteurs d'adressage de colonne (20a-20c) et des éléments de circuit situés aux intersections des conducteurs d'adressage de rangée et de colonne, chaque élément de circuit comprenant une entrée de balayage reliée à un conducteur d'adressage de rangée (34) et une entrée de données reliée à un conducteur d'adressage de colonne (20a-20c), le dispositif comprenant des circuits de commande de rangée (24a-24c) pour appliquer des signaux de sélection aux conducteurs d'adressage de rangée (34) et des circuits d'adressage de colonne (26a-26b, 30) pour appliquer des signaux de données aux conducteurs d'adressage de colonne (20a-20c), le dispositif étant subdivisé en sous-matrices (22a-22c) se terminant entre des conducteurs d'adressage de rangée adjacents (34) de sous-matrices adjacentes (22a-22c) et les circuits de commande de rangée (24a-22c) et les circuits d'adressage de colonne (26a-26c, 30) étant adaptés pour adresser un élément de circuit dans au moins deux sous-matrices (22a-22c) de façon simultanée, et les circuits d'adressage de colonne (26a, 26c, 30) comprenant des moyens de fourniture de données (26a, 26c) pour chacune des sous-matrices (22a-22c) et des moyens de commande de colonne (14, 28a-28c, 30) pour relier sélectivement les conducteurs d'adressage de colonne (20a, 20c) de chacune des sous-matrices (22a, 22c) aux moyens de fourniture de données (26a, 26c) respectifs de façon à leur appliquer les signaux de données correspondant.

**2.** Dispositif à matrice active conforme à la revendication 1, dans lequel les circuits de commande de rangée (24a-24c) sont adaptés pour choisir un conducteur d'adressage de rangée (34) dans chacune des sous-matrices (22a-22c) de manière simultanée et les circuits d'adressage de colonne (26a-26c, 30) sont susceptibles d'appliquer simultanément un signal de données à un conducteur d'adressage de colonne (20a, 20c) de chacune des sous-matrices (22a-22c).

**3.** Dispositif à matrice active conforme à la revendication 1 ou à la revendication 2, dans lequel un conducteur d'adressage de rangée (34) d'une sous-matrice (22a-22c) est relié à un conducteur d'adressage de rangée (34) de chacune des autres sous-matrices (22a, 22c) de sorte que les conducteurs d'adressage de rangée reliés (34) puissent être simultanément sélectionnés.

**4.** Matrice active conforme à l'une quelconque des revendications précédentes, dans laquelle les circuits de commande de rangée (24a-24c) sont susceptibles de sélectionner simultanément des conducteurs d'adressage de rangée (34) de deux sous-matrices (22a-22c) adjacentes de manière séquentielle des bords adjacents aux bords éloignés des deux sous-matrices (22a-22c) ou vice versa.

**5.** Dispositif à matrice active conforme à l'une quelconque des revendications précédentes, dans lequel les conducteurs d'adressage de colonne (20a-20c) d'au moins une sous-matrice (22a, 22c) sont reliés aux moyens de fourniture de données respectifs (24a-24c) par l'intermédiaire de leurs extrémités adjacentes à une autre sous-matrice (22a, 22c).

**6.** Dispositif à matrice active conforme à l'une quelconque des revendications précédentes, dans lequel les conducteurs d'adressage de colonne (20a-20c) d'une sous-matrice (22a-22c) sont reliés aux moyens de fourniture de données (26a-26c) respectifs par une ligne de fourniture de données (28a-28c) qui s'étend entre cette sous-matrice (22a-22c) et une sous-matrice (22a-22c) adjacente.

**7.** Dispositif à matrice active conforme à l'une quelconque des revendications précédentes, dans lequel les moyens de commande de colonne (14, 28a-28c, 30) comprennent un jeu de lignes de commande (32), chacune de ces lignes de commande (32) étant reliée à un moyen de commutation (14) respectif dans chacune des sous-matrices (22a, 22c), chacun des moyens de commutation (14) étant réalisé pour relier sélectivement un conducteur d'adressage de colonne (20a-20c) de chacune des sous-matrices (22a-22c) aux moyens de fourniture de données (26a-26c) respectifs.

8. Dispositif à matrice active conforme à l'une quelconque des revendications précédentes, dans laquelle chacune des sous-matrices (22a-22c) a le même nombre de conducteurs d'adressage de rangée (34).

9. Dispositif à matrice active conforme à l'une quelconque des revendications précédentes, comprenant au moins trois sous-matrices (22a-22c).

10. Dispositif d'affichage à cristaux liquides comprenant une matrice active conforme à l'une quelconque des revendications précédentes.

FIG. 1

FIG. 2

**EP 1 350 241 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5130829 A
- EP 0315365 A
- US 4630122 A
- EP 0342925 A
- US 5907313 A